# EUROPEAN PATENT APPLICATION

(11) **EP 1 361 238 A1**
(43) Date of publication of application: **12.11.2003**
(21) Application number: 03388022.0
(22) Date of filing: 23.04.2003
(51) Int. Cl.: C08G 18/48, C08K 5/00, C08K 5/521

(54) **Fire retardant pressure relieving polyurethane foam and use thereof**

(30) Priority: 30.04.2002 DK 200200647
(71) Applicant: CARPENTER CO., Richmond, VA 23230 (US)
(72) Inventor: Hansen, Kronborg A., Joerlunde, Slangerup (DK); Petersen, Poul B., 7470 Kastrup (DK)
(74) Representative: Simonsen, Christian Rosendal

(57) **Abstract**

A method for preparation of fire retardant pressure relieving polyurethane foam is disclosed where the cell opener usually used for the preparation of pressure relieving polyurethane foams is displaced by a fire retardant compound in the formulation of the foam. Surprisingly the formed foam has the pressure relieving properties even though a usual cell opener is not contained in the foam.

The fire retardant foam may be used for the manufacture of seats for e.g. aeroplanes and trains where strict regulation for flammability must be complied with in order to fulfil various regulations.

Seats for aeroplanes or trains made by use of the fire retardant pressure relieving foams can be prepared so they comply with the JAR/FAR 25.853 or DIN 54.341/DIN 5510 regulations, respectively.

## Description

The invention relates to fire retardant pressure relieving polyurethane foam, and uses thereof.

In particular the invention relates to the use of said fire retardant pressure relieving polyurethane in cushions and seats. More in particular the invention relates to the use of said fire retardant polyurethane foam in cushions and seats for aeroplanes or trains, where said cushions and seats fulfil the requirements for flammability of seats issued by the respective authorities.

### BACKGROUND FOR THE INVENTION

In principle polyurethane foams are made by foaming a mixture of a diisocyanate, a polyvalent alcohol and water, in this description called the pre foam mixture.

Various additives may be added to the pre foam mixture in order to obtain polyurethane foam having particular desirable properties, as it will be known within the area.

Depending on the actual selected ingredients in the pre foam mixture the polyurethane foam may be obtained in a soft, an intermediary or a hard quality. Soft qualities of polyurethane foams may be used for e.g. mattresses and cushions, whereas harder qualities may be used e.g. for insulation.

By itself polyurethane foams are flammable. In order to reduce the risk a fire-retarding component may be added to the pre foam mixture.

US 4,022,718 disclose the incorporation of 2,3-dibromo-2-butenediol-1,4 as a chain extender and fire retardant component.

US 4,214,055 disclose high resilience urethane foam prepared from tolylene diisocyanate and novel polymer/polyol compositions made with acrylonitrile and vinylidene monomers. The acrylonitrile:vinylidene chloride-polymer/polyol composition enhances the load-bearing properties and decreases the flammability of the foam.

A particular type of polyurethane foam is known as pressure relieving polyurethane foam. Pressure relieving polyurethane foam has the properties that the pressure on a body resting thereon is approximately evenly distributed over the surface of the resting body. This is in contrast to traditionally polyurethane foam where the sections that are most compressed exert a higher pressure on a body resting thereon than the less compressed sections.

The principal difference between ordinary flexible polyurethane foam and pressure relieving polyurethane foam is that pressure relieving foams by the impact of a constant pressure of a given weight will show a receding back pressure because of a creping property.

Pressures relieving polyurethane foams have properties that can be described as elastic and viscous.

By the preparation of flexible polyurethane foams is typically used polyetheralcohols (polyols) having average molecular weights MW of 3000-6000 Da, to provide an open structure and flexibility to the formed foam. The polyols will provide for cross binding and flexibility depending on the MW of the polyol; higher MW is expected to give more flexibility. Use of low MW polyoles will usually not give rise to a stable foam because the cross binding intensity is too large and is will usually not be possible to obtain an open celled structure.

It is important that the prepared form has an open celled structure. If closed cells are formed during foaming the carbon dioxide formed during foaming will be trapped inside the closed cells, and will subsequently be replaced by atmospheric air via diffusion. However because the diffusion of carbon dioxide out of the closed cells is faster than the diffusion of atmospheric air into the closed cells, a reduced pressure will be formed in the closed cells, with the consequence that the foam will shrink. Thus the form stability of the formed polyurethane foams will be lost. The elastic properties of the foams may also be jeopardized.

In the preparation of pressure relieving polyurethane foams a particular mixture of polyols having a low MW and polyols having a high MW will be used for the foaming. By proper selection of the particular mixture of high and low MW polyols the beneficial properties of pressure relieving foams will be obtained.

Because of the content of low MW polyols in the prefoam mixture closed cells may be formed during the foaming unless proper precautions are taken. Therefore in the preparation of pressure relieving foams a cell opener is added to the pre foam mixture. As cell opener to be included in the pre foam mixture for the production of pressure relieving polyurethane foams are used compounds such as butyl oleate or white oil.

No reports of the incorporation of a fire retardant in a pressure relieving foam seems to have published, nor is there any reports of a fire retarding pressure relieving foams. This may be caused by the fact that traditionally used cell openers are highly flammable.

Pressure relieving foams have been used for e.g. mattresses for use in hospitals and other locations where patients are lying in a bed for long periods in order to avoid patients suffering from bedsores, skin ulcers, decubitus ulcers etc.

Further the excellent properties of pressure relieving foams are used in cushions of furniture, such as chairs and sofas in order to obtain a good comfort.

Despite the long duration of travels often experienced by travelling by aeroplane or train pressure relieving polyurethane has not found widespread use in seats for aeroplanes or trains, probably because of the requirements that have to be met according to national or international regulations.

A seat to be used in an aeroplane must fulfil certain requirements in respect to flammability for safety reasons. An example of such regulation is the Joint/Federal Aviation Regulations JAR/FAR 25.853a and b. Briefly, all materials have to pass test JAR/FAR 25.853a where the materials must endure 15 seconds in the flame of a gas burner without being ignited by the flame. Test JAR/FAR 25.853b relates to the complete seat, which is exposed to a kerosene burner calibrated to approximately 1100°C for 2 minutes, thereafter the seats may burn in 5 minutes. By this treatment the test seat may lose up to 10% by weight.

Similar at least for some countries seats for trains must fulfil other requirements in respect of flammability. For example the German standard is provided in DIN 54.341/DIN 5510 "Vorbeugender Brandschutz in Schienenfarzeugen".

Briefly, such tests of seats for trains may be performed by burning approximately 126 g wood (Crib 7) or 100 g paper on a full-scale seat or a model of the cushion. It may be demanded that the upholstery fabrics are provided with one cut or two transverse cuts before the test. After removal of the burning material no progressing burn must occur at the seat; no flames must be seen after 11 or 13 minutes and all glows must be extinct after 60 minutes.

It would be desirable to use pressure relieving polyurethane foam for cushions in seats where people have to be seated for long periods, such as seats in aeroplanes or trains, in order to increase the comfort experienced by the passengers and further to avoid or reduce damages that may occur because of restricted blood circulation caused by pressure from the cushion of the seat to the person in question.

Thus in order to be able to use pressure relieving foam in seats for aeroplanes and trains it is necessary to provide said foam in a flame retardant form that is capable of fulfilling the above mentioned flammability requirements.

One object of the invention is to provide flame retardant pressure relieving polyurethane foam.

Another object of the invention is to provide a seat for aeroplanes or trains that fulfil the JAR/FAR 25.853a and b or DIN 54.341/DIN 5510 requirements respectively.

### SHORT DESCRIPTION OF THE INVENTION

According to the invention is provided fire retardant pressure relieving polyurethane foam comprising polyetherpolyols, diisocyanate, water, amine catalysts and a fire retardant that is capable of functioning as cell opener.

It was surprisingly realized that fire retardants capable of functioning as cell openers can be found and use of said fire retardants as a displacement of a usual cell opener provides a pressure relieving polyurethane foam having satisfactory pressure relieving properties and simultaneously having significantly reduced flammability.

Said fire retardant capable of functioning as cell opener is preferably selected among chlorinated phosphate esters. Tris-dichloro-propylphosphate is an example of a particular preferred fire retardant according to the invention.

The invention further provides seats for aeroplanes comprising fire retardant pressure relieving polyurethane foam according to the invention and fire retardant tissue and upholstery fabrics according to the prior art. Preferably such aeroplane seats are prepared so they fulfil the JAR/FAR 25.853b requirements.

Still further the invention provides seats for trains comprising fire retardant pressure relieving polyurethane foam according to the invention and upholstery fabrics according to the prior art. Such seats are preferably capable of fulfilling the DIN 54.341/DIN 5510 requirements.

### DETAILED DESCRIPTION OF THE INVENTION

The polyetherpolyols and diisocyanates to be used in the polyurethane foams according to the invention may in principle be any such compounds known within the area to be suited for pressure relieving polyurethane foams.

Polyetherpolyols may be chosen from the various groups of polyols as listed: polyoxyethylene diols, polyoxypropylene diols, polyoxyethylene triols, polyoxypropylene triols, polyoxyethylene tetrols and polyoxypropylene tetrols, and mixtures of same. The hydroxyl groups may be of primary or secondary nature.

It is within the skills of the person trained within the area to select a proper mixture of high MW polyols and low MW polyols that will provide for the desired pressure relieving properties of the formed polyurethane foams.

Isocyanates to be used according to the invention may be 2,4 or 2,6 isomers of toluene diisocyanates (TDI), or various forms of diphenyl methane diisocyanates (MDI) and any mixtures of these.

Toluenediisocyanate is an example of a preferred diisocyanate.

As amine catalysts may be used any such compound known within the area. Various tertary amines may be used as catalysts for the isocyanate reactions with water, polyols, allophanate groups, biuret groups and urea groups - all being present in the reactive composition during the foaming process.

As examples can be mentioned dimethyl amino ethanol (DMEA) and the di ether of same, triethylene diamine, dimethyl imidiazole (DMI) and urea.

In principle all compounds capable of simultaneously serving as cell opener and fire retardant may be used according to the invention. The person skilled in the art will appreciate how to determine if a given compound is capable of fulfilling these requirements.

The fire retardant additive or additive blend that will serve the double purpose function in fire retarding the foam as well as keeping the foam from shrinkage (the cell-opening effect) may be selected from the following compounds: halogenated phosphate esters and oligomers of the same, halogen free compounds with various content of phosphorous, and polybromo-diphenyloxides.

Examples of the halogenated compounds are tri(2-chloroisopropyl)phosphate and tri (1,3-dichloroisopropyl)phosphate and oligomeric compounds based on the mentioned compounds.

As examples of halogen free fire retardant compounds to be used according to the invention can be mentioned polyphosphates, phosphonates, and blends thereof. An example of the latter is the commercial product Fyrol™ PNX available from Akzo Nobel.

Preferred fire retardant compounds capable of functioning as cell openers can be selected among chlorinated phosphate esters. Tris-Dichloro-propyl phosphate is a particular preferred fire retardant according to the invention.

The fire retardant capable of serving as cell opener is added to pre foam mixture in similar amounts as usual cell openers. It is within the capabilities of the skilled person to determine the optimal amount for a given composition using routine experiments.

For example the fire retardant capable of serving as cell opener may be added in an amount in the range of 0.1 to 10 % by weight.

Further additives known within the area to be useful in pressure relieving foams may also be used in the pressure relieving foams according to the invention.

In this description the pre foam mixture is to be understood as the mixture of the various ingredients of the foam before polymerisation and foaming. Thus the pre foam mixture is not a stable mixture, but is temporaryly prepared immediately before foaming and preparation of the foam. The composition of the pre foam mixture determines the composition and properties of the final foam.

According to the invention the pre foam mixture comprises polyetherpolyols, diisocyanate, water, amine catalysts and a fire retardant that is capable of functioning as cell opener. Other additives known within the art to be useful in polyurethane foams may also be added, however, it is important for the flammability of the final foam that fire-nourishing compounds should not be included. In particular it is important that compounds such as white oil and butyl oleate, are not included, as they would increase the flammability of the foams contrary to the aim of the invention.

Pressure relieving polyurethane foam may be prepared by foaming of a pre foam mixture containing all necessary ingredients, which pre foam mixture polymerises under release of a gas which leads to expansion of the mixture and formation of the foam. The foaming may be preformed at atmospheric pressure or at a higher pressure, which will influence the final properties of the foam. Conditions suitable for foaming a pre foam mixture for the formation of pressure relieving polyurethane foams will be known for the person skilled in the art. After the foaming process the formed foam will be solidified and can be cut into suitable size and shape.

The fire retardant pressure relieving polyurethane foams according to the invention may be sed for all used where traditional resilient polyurethane foams or pressure relieving polyurethane foams are used.

Cushions containing fire retardant pressure relieving foams according to the invention may be used for all forms of cushions. The person skilled in the art will appreciate that the cushions may be prepared using known procedures and known upholstery fabrics according the well known procedures. Other elements traditionally used for cushions may also be used for cushions comprising fire retardant pressure relieving polyurethane foams according to the invention.

A preferred example for use of the fire retardant pressure relieving polyurethane foam according to the invention is in seats, particularly seats for aeroplanes or trains.

Seats for aeroplanes are usually made by cutting the foam in the intended form, and covering this with a fire retardant tissue. Further an upholstery fabric may be provided outside this arrangement.

In order to be approved for use in aeroplanes under the legislation presently in force in many countries such aeroplane seats must fulfil the requirements specified in JAR/FAR 25.853 a and b (Joint/Federal Aviation Regulations). These regulations require that all materials used in the seats individually must fulfil the JAR/FAR 25.853 a test where the materials are exposed to a vertical arranged gas burner for 15 seconds which should not lead to ignition of the materials. The complete seat or a model of the cushions is exposed to a kerosene burner fuelled with jet fuel and providing a temperature of approximately 1100 °C for 2 minutes. The seats must burn for less that 5 minutes after removal from the burner and during the test the specimens are allowed to lose 10% of the original weight.

Train seats may be prepared by covering the foam cut into a suitable shape by upholstery fabrics.

In order to be approved for use in public transportation the train seats may have to fulfil certain regulations such as the German regulation DIN 54.341 / DIN 5510 (Vorbeugender Brandschutz in Schienenfarzeugen).

The fire retardant pressure relieving polyurethane foam according to the invention may also be used in other areas where the use of a fire retardant resilient foam are or will be desirable or prescribed by regulations, for example mattresses, overlays for mattresses, upholstery and cushions for chairs and furniture.

The foam according to the invention may also be useful in other applications such as acoustic insulation, wall tapestry, carpet underlay and packing materials.

The invention is now further illustrated by examples, which are provided only for illustration of the invention and should not in any way be considered as limiting.

### EXAMPLES

### Example 1. Preparation of polyurethane foam.

Polyurethane foam was prepared using a bench foaming according to the recipe:

| Ingredient | trade name | supplier | Amount, parts by weight |
|---|---|---|---|
| Polyol 15% EO | Arcol 1108 | Bayer | 20.00 |
| Polyol PPO only | Voranol CP 750 | Dow | 80.00 |
| Diether of DMEA | Niax A1-amine | Crompton | 0.70 |
| Triethylene diamine | Dabco-Amine | Tosoh | 0.35 |
| Polyetherpolysiloxane copolymer | Surfactant L 620 | Crompton | 1.20 |
| Water | | | 2.00 |
| Stannous octoate, (catalyst) | | Acima | 0.20 |
| TDI, 65% 2,4 isomer | TDI 65 | Bayer | 43.80 |

A pre-blend of all ingredients apart from TDI was made using a laboratory mixer (1,500 rpm).

TDI was quickly added to the pre-blend and the combined blend mixed for 6 seconds and immediately poured into a paper box mould.

Foam-formation commenced approximately 15 seconds after TDI addition and the foam reached final height approximately 120 seconds after TDI addition.

The foam was left overnight in the mould.

Next day it was observed that the foam had shrunk due to an overweight of closed cells in the foam structure.

### Example 2. Preparation of fire retardant polyurethane foam

A bench foaming based on the same ingredients as listed in example 1 was conducted with further addition of 8 parts by weight of a fire retardant, tri(1,3-dichloroisopropyl)phosphate (Fyrol™ FR-2, Akzo Nobel).

The foam was left overnight in the mould.

The next day it was observed that the foam had maintained the original shape as was seen after full rise the day before. The cell opening effect of the fire-retardant additive was obvious.

### Example 3. Examination of fire retardant polyurethane foam.

The fire retardant foam of example 2 was examined for further physical properties as well as for fire retardant performance.

### Physical properties

A test specimen 100*100*50 mm was cut from the foam. The compression load deflection according to a modified version ISO 3386 was registered.

The result revealed a satisfactory "slow-recovery" performance showing a distinct high hysteresis in the compression-relaxation loop.

### Fire retardant performance

The foam of example 2 was further subjected to a vertical flame test, according to JAR/FAR 25853 part a.

The test showed that the foam passed the test.

## Claims

1. Fire retardant pressure relieving polyurethane foam comprising polyetherpolyols, diisocyanate, water, amine catalysts and a fire retardant that is capable of functioning as cell opener.

2. Fire retardant pressure relieving polyurethane foam according to claim 1, prepared by foaming a mixture comprising:
30-60 parts diisocyanate,
1,5-3 parts water,
amine catalysts and a fire retardant that is capable of functioning as cell opener, per 100 parts of polyetherpolyols.

3. Fire retardant pressure relieving polyurethane foam according to claim 2, wherein the diisocyanate is toluenediisocyanate.

4. Fire retardant pressure relieving polyurethane foam according to any of claims 1 to 3, wherein the fire retardant is selected among halogenated phosphate esters and oligomers thereof, halogen free polyphosphates, phosphonates, polybromodiphenyloxides and blends thereof.

5. Fire retardant pressure relieving polyurethane foam according to claim 4, wherein the fire retardant is selected among: tri(2-chloroisopropyl)phosphate, tri(1,3-dichloroisopropyl)-phosphate and oligomeric compounds based thereon.

6. Fire retardant pressure relieving polyurethane foam according to claim 5, wherein the fire retardant is tris-dichloro-propyl phosphate.

7. Fire retardant pressure relieving polyurethane foam according to any of claim 1-6, wherein the foam fulfils the requirement of JAR/FAR 25.853 part a.

8. Use of a fire retardant pressure relieving polyurethane foam according to any of claim 1-7, for the preparation of a cushion or a seat.

9. Use according to claim 8, wherein the seat is a seat for an aeroplane or for a train.

10. Use according to claim 9, wherein the seat is for an aeroplane and further comprise a fire retarding tissue.

11. Use of the fire retardant pressure relieving polyurethane according to any of claim 1-7, for mattresses, overlays for mattresses, upholstery, cushions for chairs and furniture, acoustic insulation, wall tapestry, carpet underlay or packing materials.

12. Seat for an aeroplane comprising a fire retardant pressure relieving foam according to any of claim 1-7.

13. Seat according to claim 12, further comprising a fire retardent tissue.

14. Seat according to claim 12 or 13, wherein the seat fulfils the fire requirements according to JAR/FAR 25.853 part b.

15. Seat for a train comprising a fire retardant pressure relieving polyurethane foam according to any of claims 1-7.

16. Seat according to claim 15, wherein the seat fulfils the fire requirements of DIN 54.341 /DIN 5510.
